# EUROPÄISCHE PATENTSCHRIFT

(11) **EP 3 350 047 B1**
(45) Veröffentlichungstag und Bekanntmachung des Hinweises auf die Patenterteilung: **06.11.2019**
(21) Anmeldenummer: 16767216.1
(22) Anmeldetag: 14.09.2016
(51) Int. Cl.: B60T 17/08, B21D 39/04

(54) **KOMBINIERTER ZYLINDRISCHER BETRIEBSBREMS- UND FEDERSPEICHERBREMSZYLINDER UND VERFAHREN ZU SEINER HERSTELLUNG**
COMBINED SERVICE BRAKE AND SPRING BRAKE CYLINDER AND METHOD FOR ITS MANUFACTURING
CYLINDRE COMBINÉ DE FREIN DE SERVICE ET FREIN À RESSSORT, ET PROCÉCÉ POUR SA FABRICATION

(30) Priorität: 15.09.2015 DE 102015115488
(43) Veröffentlichungstag der Anmeldung: 25.07.2018
(73) Patentinhaber: KNORR-BREMSE Systeme für Nutzfahrzeuge GmbH, 80809 München (DE)
(72) Erfinder: HEMERY, Frank, 14600 Honfleur (FR)
(86) Internationale Anmeldenummer: PCT/EP2016/071679
(87) Internationale Veröffentlichungsnummer: WO 2017/046156

(56) Entgegenhaltungen:
- EP-A2- 0 315 463
- WO-A1-01/81728
- DE-A1-102013 110 639
- DE-B4-102005 053 674

## Beschreibung

Die Erfindung geht aus von einem kombinierten zylindrischen Betriebsbrems- und Federspeicherbremszylinder gemäß dem Oberbegriff von Anspruch 1 sowie von einem Verfahren zu seiner Herstellung gemäß Anspruch 9.

Ein kombinierter Betriebsbrems- und Federspeicherbremszylinder sowie ein Verfahren zu seiner Herstellung sind beispielsweise in DE 10 2005 053 674 B4 beschrieben. Bei dem bekannten Verfahren wird der Rand des Gehäuses des Betriebsbremszylinders zu einer nach radial außen ragenden Schulter vorgeformt und die Zwischenwand zusammen mit der Membrane in einer Matrix positioniert, wobei ein die Zwischenwand und die Membrane umschließender Rand des Gehäuses des Federspeicherbremszylinders die Zwischenwand und die Membrane axial überragt. Sodann wird ein ringförmiger Stempel mit einer im Querschnitt gesehen verrundeten Kontur von oben her gegen den Rand des Gehäuses des Federspeicherbremszylinders gedrückt, so dass der Rand des Gehäuses des Federspeicherbremszylinders die vorgeformte Schulter des Gehäuses des Betriebsbremszylinders, den Rand der Membrane und den Rand der Zwischenwand formschlüssig umgreift, wodurch das Gehäuse des Betriebsbremszylinders, die Membrane, die Zwischenwand und das Gehäuse des Federspeicherbremszylinders miteinander in einem Schritt verbunden werden.

Ein gattungsgemäßer kombinierter Betriebsbrems- und Federspeicherbremszylinder wird in EP 0 315 463 A2 beschrieben. Dort wird der Randflansch des Federspeicherbremszylinders über einen Randflansch der Zwischenwand gebördelt, wobei zwischen den beiden Randflanschen ein Befestigungsrand einer Membrane geklemmt wird, die die be- und entlüftbare Federspeicherbremskammer von einer Federkammer trennt, welche die Speicherfeder aufnimmt. Die Membran ist mit ihrem Mittelteil am Federspeicherbremskolben befestigt. Der geklemmte Befestigungsrand der Membrane dient einerseits Befestigung der Membrane und andererseits als hermetische Dichtung für die Federspeicherbremskammer. Die Bördelung erfolgt mittels einer in Umfangsrichtung rotatorisch umlaufenden Rolle, die am Randflansch des Federspeicherbremszylinders angreift und deren Arbeitswinkel in Bezug zu diesem Randflansch abhängig von ihrer Axialposition ist.

Der vorliegenden Erfindung liegt demgegenüber die Aufgabe zugrunde, einen kombinierten Betriebsbrems- und Federspeicherbremszylinder der eingangs erwähnten Art sowie ein Verfahren zu dessen Herstellung derart weiter zu entwickeln, dass er einfacher zu fertigen ist und zugleich eine hohe Dichtigkeit gewährleistet.

Diese Aufgabe wird erfindungsgemäß durch die Merkmale von Anspruch 1 und Anspruch 9 gelöst.

### Offenbarung der Erfindung

Erfindungsgemäß ist vorgesehen, dass der Querschnitt des Dichtungselements wenigstens eine radial innere Ausnehmung aufweist, in welche wenigstens ein radial äußerer Vorsprung des ersten Randflansches formschlüssig eingreift, und dass der Querschnitt des Dichtungselements in Richtung der Mittelachse gesehen sich von der Ausnehmung weg zum Federspeicherbremszylinder hin verjüngt.

Durch den Formschluss zwischen der radial inneren Ausnehmung des ringförmigen Dichtungselements und des radial äußeren Vorsprungs des ersten Randflansches ist das Dichtungselement durch seine elastische Vorspannung in radialer Richtung und in axialer Richtung gesichert, wenn der zweite Randflansch des Gehäuses des Federspeicherbremszylinders unter plastischer Verformung einerseits um das Dichtungselement und andererseits um den ersten Randflansch der Zwischenwand von außen her derart plastisch herumgeformt wird. Dann kann die dadurch hervorgehende Bördelverbindung insbesondere mit Hilfe eines Bördelwerkzeugs ausgeführt werden, welches eine axiale Bewegung ausführt, bei welcher relativ hohe Kräfte auf das wenigstens eine Dichtungselement ausgeübt werden, ohne dass dieses dabei seine Lage verändert. Die erfindungsgemäßen Merkmale tragen daher zur Gewährleistung einer hohen Dichtigkeit des kombinierten Federspeicher- und Betriebsbremszylinders bei. Daher ermöglichen die erfindungsgemäßen Maßnahmen auch eine Verwendung eines sich axial bewegenden ringförmigen Bördelwerkzeugs, beispielsweise in Form eines Bördelstempels.

Die Verjüngung des Querschnitts des Dichtungselements ermöglicht, dass eine Axialbelastung in einer Richtung entgegen der Verjüngung, beispielsweise hervorgerufen durch eine Axialbewegung eines Bördelstempels eine radiale Kompression des wenigstens einen Dichtungselements hervorruft, welche dann das Dichtungselement radial komprimiert und dann weiterhin für eine hohe Dichtigkeit sorgt.

Das erfindungsgemäße Verfahren zur Herstellung des erfindungsgemäßen kombinierten Betriebsbrems- und Federspeicherbremszylinders beinhaltet wenigstens die folgenden, in der angegebenen Reihenfolge zeitlich aufeinander folgenden Verfahrensschritte:
a) Das Dichtungselement wird unter radial elastischer Aufweitung derart am ersten Randflansch der Zwischenwand montiert, dass beim radial elastischen Rückfedern des Dichtungselements der radial äußere Vorsprung des ersten Randflansches formschlüssig in die radial innere Ausnehmung des Dichtungselements formschlüssig eingreift,
b) wenigstens die Zwischenwand, die wenigstens eine Speicherfeder und der Federspeicherbremskolben werden in eine ringförmige Matrix eines Bördelwerkzeugs eingelegt, wobei die Matrix wenigstens den ersten Randflansch der Zwischenwand mit einer im Querschnitt gesehen gerundeten Kontur mit Abstand umfasst,
c) das Gehäuse des Federspeicherbremszylinders wird innerhalb eines ringförmigen Stempel des Bördelwerkzeugs derart positioniert und angeordnet, dass das Gehäuse zusammen mit dem Stempel in Richtung der Mittelachse bewegbar ist und ein zylindrisches Ende des zweite Randflansches des Gehäuses des Federspeicherbremszylinders mit der gerundeten Kontur axial fluchtet, wobei der der zweite Randflansch in einer Ausgangsposition des Stempels von der Kontur der Matrix axial beabstandet ist,
d) der ringförmige Stempel wird zusammen mit dem Gehäuse des Federspeicherbremszylinders in einem Hub ausgehend von der Ausgangsposition in Richtung Matrix in eine Endposition bewegt, wobei im Laufe dieser Bewegung das zylindrische Ende des zweiten Randflansches des Gehäuses des Federspeicherbremszylinders gegen die gerundete Kontur der Matrix gedrückt wird, bis das zylindrische Ende derart plastisch umgeformt ist, dass es das wenigstens eine Dichtungselement und den ersten Randflansch der Zwischenwand formschlüssig umgreift.

In vorteilhafter Weise werden dabei der Federspeicherbremszylinder, das wenigstens eine Dichtungselement und die Zwischenwand in einem einzigen Arbeitsschritt oder Hub des Stempels miteinander formschlüssig, d.h. mittels einer Bördelverbindung verbunden. Insbesondere wird dabei der zweite Randflansch des Gehäuses des Federspeicherbremszylinders umgebördelt und schafft eine Befestigung des Gehäuses des Federspeicherbremszylinders an der Zwischenwand unter Zwischenordnung und formschlüssiger Klemmung des wenigstens einen Dichtungselements.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt weist der Querschnitt des Dichtungselements einen im Wesentlichen quer zur Mittelachse verlaufendes ringplattenförmiges Basisteil auf, welches zwischen einer ersten, im Wesentlichen quer zur Mittelachse verlaufenden Stufe des ersten Randflansches und einer zweiten, im Wesentlichen quer zur Mittelachse verlaufende Stufe des zweiten Randflansches axial geklemmt ist. Dadurch wird eine zuverlässige Fixierung des Dichtungselements sowie eine hohe Dichtigkeit gewährleistet.

Gemäß einer Weiterbildung ragt von dem ringplattenförmigen Basisteil ein hülsenförmiges Halteteil im Wesentlichen parallel zur Mittelachse weg, an welchem die wenigstens eine radiale Ausnehmung ausgebildet ist.

Gemäß einer Fortbildung kann ein zu dem Federspeicherbremszylinder hin und von der Zwischenwand weg ragendes freies Ende des Halteteils im Querschnitt gesehen zapfenförmig ausgebildet sein. "Zapfenförmig" bedeutet, dass sich der Querschnitt in axialer Richtung gesehen zunächst erweitert und dann zum freien Ende hin verjüngt. Dies ermöglicht einerseits, dass im Rahmen der Fertigung der Bördelung der Bördelstempel an dem Halteteil axial entlang geführt werden kann, ohne dass das freie Ende des Halteteils gequetscht oder nach radial außen gedrängt wird. Bedingt durch die in axialer Richtung vorliegende Querschnittserweiterung des Zapfens wird dann der Halteteil zwischen dem ersten und zweiten Randflansch unter Vorspannung geklemmt, welche ebenfalls für eine hohe Dichtigkeit sorgt.

Besonders bevorzugt ist das Dichtungselement ein von einem Befestigungsrand einer Membrane abweichendes Dichtungselement. Mit anderen Worten stellt das Dichtungselement keinen Bestandteil einer Membrane dar, welche etwa die be- und entlüftbare Federspeicherbremskammer von einer wenigstens eine Speicherfeder aufnehmenden Federkammer trennt. Alternativ kann das Dichtungselement aber auch durch einen solchen Befestigungsrand einer Membrane gebildet werden oder ein Teil von diesem sein.

Besonders bevorzugt bildet der zweite Randflansch des Gehäuses des Federspeicherbremszylinders im Querschnitt gesehen ein Haken aus, welcher einerseits das Dichtungselement und andererseits den ersten Randflansch der Zwischenwand umgreift.

Gemäß einer Weiterbildung weist die Zwischenwand einen vom ersten Randflansch in axialer Richtung weg weisenden und beabstandeten dritten Randflansch auf, welcher mit dem Gehäuse des Betriebsbremszylinders verbunden ist, wobei die Verbindung zwischen dem dritten Randflansch der Zwischenwand und dem Gehäuse des Betriebsbremszylinders durch plastische Umformung eines vierten Randflansches des Gehäuses des Betriebsbremszylinders um den dritten Randflansch sowie um den Befestigungsrand der Membrane herum hergestellt ist.

Gemäß einer Fortbildung des Verfahrens kann vorgesehen sein, dass der zweite Randflansch zeitlich vor dem Schritt a) des Verfahrens derart vorgeformt wird, dass er eine radial äußere Stufe aufweist und dass der ringförmige Stempel eine radial innere Kontur aufweist, welche komplementär zu der radial äußeren Stufe des zweiten Randflansches ausgebildet ist.

Dann kann bei Schritt c) des Verfahrens das Positionieren des Gehäuses des Federspeicherbremszylinders innerhalb eines ringförmigen Stempels des Bördelwerkzeugs derart durchgeführt werden, dass die radial äußere Stufe des zweiten Randflansches die radial innere Kontur des Stempels kontaktiert und das restliche Gehäuse des Federspeicherbremszylinders von der Matrix (54) weg weisend den Stempel durchragt.

Insbesondere kann nachfolgend zu Schritt d) des Verfahrens der Stempel in die Ausgangsposition zurück bewegt werden und dann der kombinierte Betriebsbrems- und Federspeicherbremszylinder dem Bördelwerkzeug entnommen werden.

Insbesondere können der Stempel und/oder die Matrix aus einem Bauteil oder aus aneinander lösbar befestigten Bauteilen bestehen.

Gemäß alternativer Ausführungsformen des Verfahrens kann Schritt a) des Verfahrens auch zeitlich nachfolgend in Bezug zu Schritt b) erfolgen und/oder Schritt c) des Verfahrens kann auch zeitlich nachfolgend in Bezug zu Schritt b) erfolgen.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

Identische bzw. gleich wirkende Bauteile und Baugruppen sind in unterschiedlichen Ausführungsformen jeweils mit denselben Bezugszahlen bezeichnet.

Nachstehend ist ein Ausführungsbeispiel der Erfindung in der Zeichnung dargestellt und in der nachfolgenden Beschreibung näher erläutert. In der Zeichnung zeigt
- Fig.1: eine Querschnittsdarstellung eines kombinierten Betriebsbrems- und Federspeicherbremszylinders gemäß einer bevorzugten Ausführungsform der Erfindung;
- Fig.2: einen vergrößerten Ausschnitt von Fig.1 mit einer Bördelung zur Verbindung eines ersten Randflanschs einer Zwischenwand, einem zweiten Randflansch des Gehäuses des Federspeicherbremszylinders und einem Dichtungselement;
- Fig.3A: eine Querschnittsdarstellung betreffend einen Schritt eines Verfahrens zur Herstellung des kombinierten Betriebsbrems- und Federspeicherbremszylinders von Fig.1;
- Fig.3B: einen vergrößerten Ausschnitt aus Fig.3A;
- Fig.4A: eine Querschnittsdarstellung betreffend einen weiteren Schritt des Verfahrens zur Herstellung des kombinierten Betriebsbrems- und Federspeicherbremszylinders von Fig.1;
- Fig.4B: einen vergrößerten Ausschnitt aus Fig.4A;
- Fig.5A: eine Querschnittsdarstellung betreffend einen weiteren Schritt des Verfahrens zur Herstellung des kombinierten Betriebsbrems- und Federspeicherbremszylinders von Fig.1;
- Fig.5B: einen vergrößerten Ausschnitt aus Fig.5A;

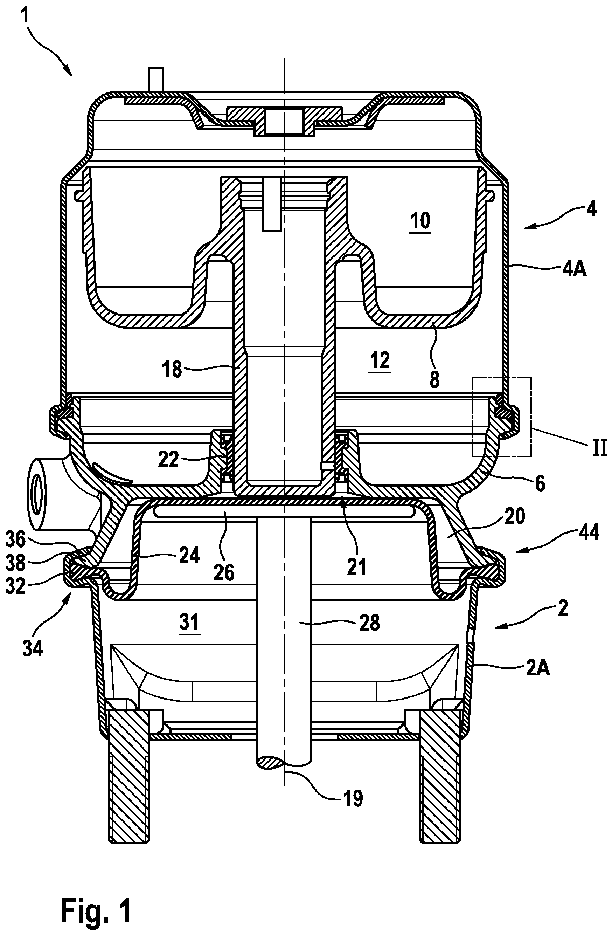

In **Fig.1** ist ein kombinierter Betriebsbrems- und Federspeicherbremszylinder 1, nachfolgend Kombizylinder genannt dargestellt. Der Kombizylinder 1 besteht aus einem Betriebsbremszylinder 2 und aus einem mit diesem baulich und funktionell verbundenen Federspeicherbremszylinder 4. Der Betriebsbremszylinder 2 besitzt ein Gehäuse 2A und der Federspeicherbremszylinder ein Gehäuse 4A. Der Betriebsbremszylinder 2 und der Federspeicherbremszylinder 4 sind durch eine Zwischenwand 6 voneinander getrennt. Genauer trennt die Zwischenwand 6 eine be- und entlüftbare Federspeicherbremskammer 12 von einer be- und entlüftbaren Betriebsbremskammer 20.

Innerhalb des Federspeicherbremszylinders 4 ist in bekannter Weise ein Federspeicherbremskolben 8 verschiebbar angeordnet, wobei sich an einer Seite des Federspeicherbremskolbens eine hier nicht gezeigte Speicherfeder abstützt, welche anderendseitig an einem Boden des Federspeicherbremszylinders 4 abgestützt ist. Zwischen dem Federspeicherbremskolben und der Zwischenwand 6 ist eine Federspeicherbremskammer 12 ausgebildet, welche belüftbar und entlüftbar ist. Bei Belüftung der Federspeicherbremskammer 12 wird der Federspeicherbremskolben 8 unter Verspannung der Speicherfeder axial in Lösestellung der Feststellbremse verschoben. Bei dieser Verschiebung des Federspeicherbremskolbens 8 wird die Luft, welche innerhalb einer die Speicherfeder aufnehmenden Federkammer 10 ansteht, über ein Entlüftungsventil herausgedrückt. Wird dagegen zum Zwecke der Abbremsung die Federspeicherbremskammer 12 entlüftet, dann vermag die Speicherfeder den Federspeicherbremskolben 8 in Zuspannstellung zu verschieben. Das Gehäuse 4A ist beispielsweise einstückig ausgebildet und besteht aus dünnwandigem, in seine Form beispielsweise durch Tiefziehen plastisch verformtem Blech aus Stahl oder Aluminium. Die Funktion eines solchen Federspeicherbremszylinders 4 ist hinlänglich bekannt und soll deshalb hier nicht weiter erläutert werden.

Der Federspeicherbremskolben 8 ist mit einer hohlen Federspeicherbremskolbenstange 18 verbunden, welche sich durch die Zwischenwand 6 in die Betriebsbremskammer 20 des Betriebsbremszylinders 2 erstreckt. Eine in eine zentrale Bohrung 21 der Zwischenwand 6 eingesetzte Dichtungsanordnung 22 dichtet gegenüber der Außenwand der Federspeicherbremskolbenstange 18 während deren Längsbewegung ab. In die Betriebsbremskammer 20 mündet ein nicht gezeigter Einlass, über welchen zum Betätigen des Betriebsbremszylinders 2 Druckluft eingelassen und abgelassen wird. Die Druckluft wirkt auf eine innerhalb des Betriebsbremszylinders 2 eingesetzte Membrane 24 ein, an deren entgegen gesetzter Seite ein Druckstück in Form eines steifen Membrantellers 26 vorgesehen ist. Genauer trennt die Membrane 24 die mit Druckmittel be- und entlastbare Betriebsbremskammer 20 des Betriebsbremszylinders 2 von einer eine am Membranteller 26 abgestützte Rückholfeder aufnehmende Federkammer 31.

Der Membranteller 26 ist mit einer Druckstange 28 verbunden, die mit einem Bremsbetätigungsmechanismus außerhalb des Kombizylinders 1 zusammenwirkt. Hierbei kann es sich beispielsweise um Betätigungselemente einer Scheibenbremse eines Kraftfahrzeugs handeln. Der Betriebsbremszylinder 2 ist ein aktiver Bremszylinder, d.h. dass die Betriebsbremse durch Belüften der Betriebsbremskammer 20 zugespannt und durch Entlüften gelöst wird. Die sich einerseits am Membranteller 26 und andererseits am Boden des Betriebsbremszylinders 2 abstützende, hier nicht gezeigte Rückholfeder sorgt dafür, dass die Druckstange 28 bei entlüfteter Betriebsbremskammer 20 in die Lösestellung zurückgeholt wird.

Ein radial äußerer Befestigungsrand 32 der Membrane 24 weist einen keilförmigen, sich nach radial innen hin verjüngenden Querschnitt auf. Dieser radial äußere Befestigungsrand 32 der Membrane 24 mit dem keilförmigen, sich nach radial innen verjüngenden Querschnitt ist in eine komplementär geformte Aufnahme 34 mit keilförmigem, sich nach radial außen erweiternden Querschnitt zwischen einem dritten Randflansch 38 der Zwischenwand 6 und einem vierten Randflansch 36 des Betriebsbremszylinders 2 geklemmt. Genauer bilden der vierte Randflansch 36 des Betriebsbremszylinders 2 und der dritte Randflansch 38 der Zwischenwand 6 mit ihren gegeneinander weisenden Innenflächen eine Aufnahme 34 mit keilförmigem Querschnitt für den Befestigungsrand 32 der Membrane 24 zwischen sich aus. Der Befestigungsrand 32 der Membrane 24 ist also keilförmig ausgebildet und zwischen komplementär keilförmig ausgebildeten Flächen des dritten Randflansches 38 der Zwischenwand 6 und des vierten Randflansches 36 des Gehäuses 2A des Betriebsbremszylinders 2 formschlüssig gehalten.

Der vierte Randflansch 36 des Gehäuses 2A des Betriebsbremszylinder 2 ist unter plastischer Verformung einerseits um den Befestigungsrand 32 der Membrane 24 und andererseits um den dritten Randflansch 38 der Zwischenwand 6 derart herumgeformt, dass einerseits das Gehäuse 2A des Betriebsbremszylinders 2 mit der Zwischenwand 6 verbunden und andererseits der Befestigungsrand 32 der Membrane 24 zwischen dem vierten Randflansch 36 des Gehäuses 2A des Betriebsbremszylinders 2 und dem dritten Randflansch 38 der Zwischenwand 6 formschlüssig gehalten ist. Eine solche durch plastische Umformung eines flächigen Bauteils zustande gekommene Verbindung formschlüssige Verbindung wird auch Bördelung (crimping) genannt, d.h. im vorliegenden Fall wurde der vierte Randflansch 36 gebördelt. Dann sind der Randflansch 36 des Gehäuses 2A des Betriebsbremszylinder 2, der Befestigungsrand 32 der Membrane 24 und der erste Randflansch 38 der Zwischenwand 6 mittels einer Bördelung 44 miteinander verbördelt.

Dabei weist der vierte Randflansch 36 des Gehäuses 2A des Betriebsbremszylinders 2 im Querschnitt gesehen einen hakenförmigen Verlauf auf, welcher einerseits den Befestigungsrand 32 der Membrane 24 und den dritten Randflansch 38 der Zwischenwand 6 umgreift und andererseits ein Widerlager für den Befestigungsrand 32 der Membrane 24 ausbildet.

Andererseits weist die Zwischenwand 6 einen vom dritten Randflansch 38 in axialer Richtung weg weisenden und axial beabstandeten ersten Randflansch 40 auf. Die Verbindung zwischen dem ersten Randflansch 40 der Zwischenwand 6 und einem zweiten Randflansch, welcher das freie Ende des Gehäuses 4A des Federspeicherbremszylinders 4 bildet, ist wiederum durch eine Bördelung 44 entstanden.

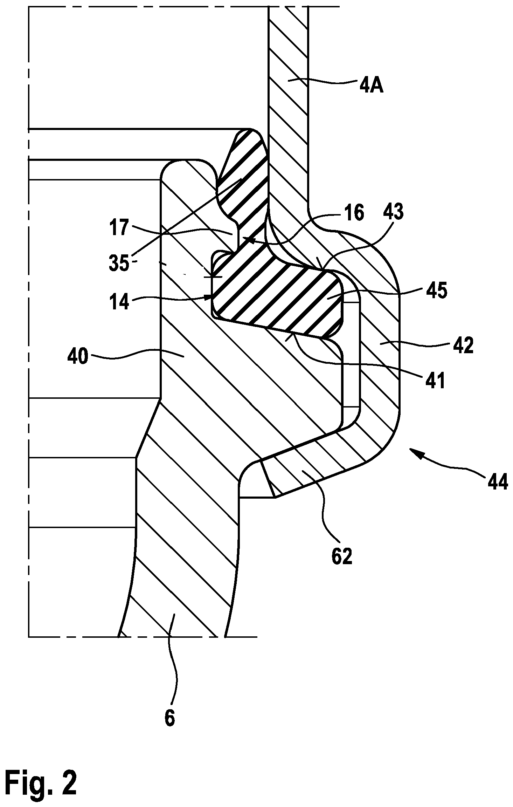

In **Fig.2** ist die Bördelung 44 (crimping) im Einzelnen gezeigt. Daraus geht hervor, dass der zweite Randflansch 42 des Gehäuses 4A des Federspeicherbremszylinders 2 unter plastischer Verformung einerseits um ein Dichtungselement 14 und andererseits um den ersten Randflansch 40 der Zwischenwand 6 von außen her derart plastisch herumgeformt ist, dass einerseits das Gehäuse 4A des Federspeicherbremszylinders 4 mit der Zwischenwand 6 verbunden und andererseits das Dichtungselement 14 zwischen dem ersten Randflansch 40 der Zwischenwand und dem zweiten Randflansch 42 des Gehäuses 4A des Federspeicherbremszylinders 4 axial sowie radial formschlüssig gehalten ist. Dabei weist der Querschnitt des Dichtungselements 14 bevorzugt eine radial innere Ausnehmung 16 aufweist, in welche beispielsweise ein radial äußerer Vorsprung 17 des ersten Randflansches 40 formschlüssig eingreift. Dabei verjüngt sich der Querschnitt des Dichtungselements 14 in Richtung einer Mittelachse 19 des kombinierten Betriebsbrems- und Federspeicherbremszylinders 1 gesehen von der Ausnehmung 16 weg zum Federspeicherbremszylinder 4 hin.

Besonders bevorzugt weist der Querschnitt des Dichtungselements 14 einen im Wesentlichen quer zur Mittelachse 19 verlaufendes ringplattenförmiges Basisteil 45 auf, welches zwischen einer ersten, im Wesentlichen quer zur Mittelachse 19 verlaufenden Stufe 41 des ersten Randflansches 40 und einer zweiten, im Wesentlichen quer zur Mittelachse 19 verlaufende Stufe 43 des zweiten Randflansches 42 axial geklemmt ist. Besonders bevorzugt bildet der zweite Randflansch 42 des Gehäuses 4A des Federspeicherbremszylinders 4 im Querschnitt gesehen ein Haken aus, welcher einerseits das Dichtungselement 14 und andererseits den ersten Randflansch 40 der Zwischenwand umgreift. Dadurch wird eine zuverlässige Fixierung des Dichtungselements 14 sowie eine hohe Dichtigkeit gewährleistet.

Von dem beispielsweise ringplattenförmigen Basisteil 45 ragt ein ringförmiges Halteteil 35 im Wesentlichen parallel zur Mittelachse 19 weg, an welchem die radial innere Ausnehmung 16 ausgebildet ist. Ein zum Federspeicherbremszylinder 4 hin und von der Zwischenwand 6 weg ragendes freies Ende des Halteteils 35 ist beispielsweise im Querschnitt gesehen zapfenförmig ausgebildet. Das ringförmige Dichtungselement 14 besteht vorzugsweise aus einem elastischen Material, beispielsweise aus einem Elastomer.

Besonders bevorzugt ist hier das Dichtungselement 14 ein von einem Befestigungsrand einer Membrane abweichendes Dichtungselement. Mit anderen Worten stellt das Dichtungselement 14 bevorzugt keinen Bestandteil einer Membrane dar, welche etwa die be- und entlüftbare Federspeicherbremskammer von einer wenigstens eine Speicherfeder aufnehmenden Federkammer trennen könnte. Alternativ kann das Dichtungselement 14 aber auch durch einen solchen Befestigungsrand einer Membrane gebildet werden oder ein Teil von diesem sein. Das Dichtungselement 14 dichtet dann die Federspeicherbremskammer 12 gegenüber der Federkammer 10 bzw. der Umgebung vorzugsweise hermetisch ab.

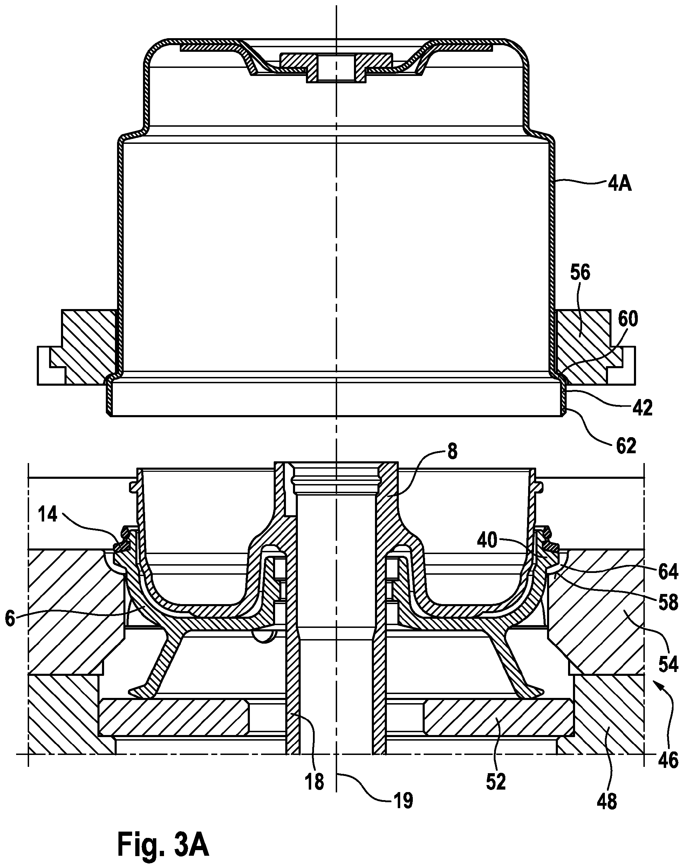

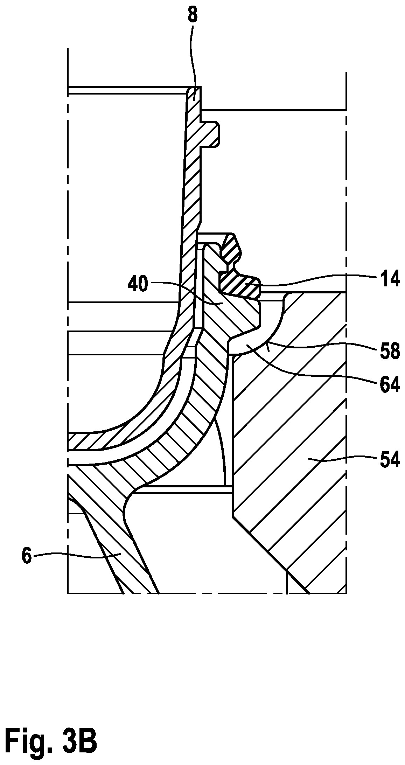

In **Fig.3A** ist ein Bördelwerkzeug 46 gezeigt, mit welchem die oben beschriebene Bördelung 44 hergestellt wird. Das Bördelwerkzeug 46 hat beispielsweise einen Standfuß 48, an welchem eine stationäre, ringförmige Matrix 54 befestigt ist. Eine radial innere Umfangsfläche der Matrix 54 weist eine umlaufende gerundete Kontur 58 auf, die nach Art einer Stufe einer Stufenbohrung hier beispielsweise oben weist, wie am Besten in **Fig.3B** zu sehen ist.

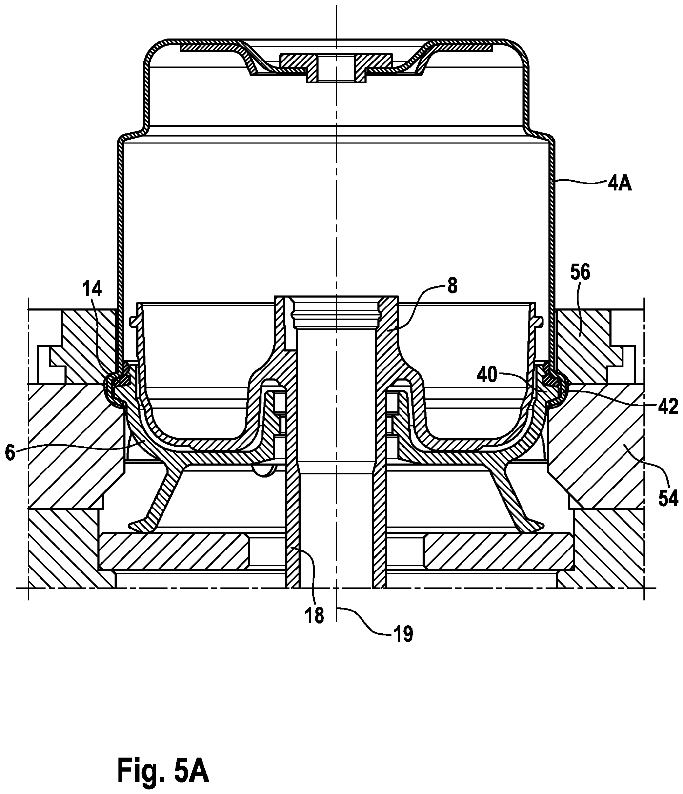

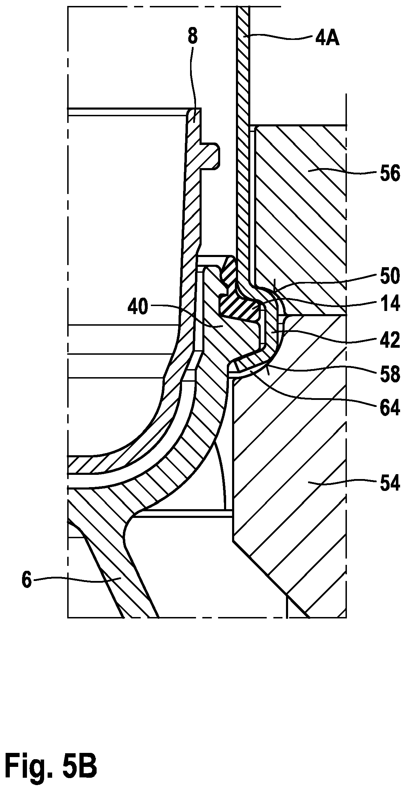

Entlang von hier nicht gezeigten Säulen, die am Standfuß 48 vertikal befestigt sind, ist ein ringförmiger Stempel 56 axial beweglich, der von einem hier nicht gezeigten Antrieb ausgehend von der in Fig.3A und Fig.3B gezeigten oberen Ausgangsposition in eine in **Fig.5A** und **Fig.5B** gezeigte untere Endposition bewegt werden kann. In eine Stufenbohrung des Standfußes 48 ist ein ringförmiger Abstandshalter eingelegt. Das Bördelwerkzeug 46 weist außerdem einen hier nicht gezeigten Presskopf auf, welcher ebenfalls entlang der Säulen bewegbar und in Richtung der Mittelachse 19 kraftangetrieben ist. Der Presskopf wirkt dann von oben her auf das Gehäuse 4a und schiebt es entlang der Säulen nach unten.

Hiervon ausgehend wird die Bördelung 44 zwischen dem zweiten Randflansch 42 des Gehäuses 4Ades Federspeicherbremszylinders 4, dem Dichtungselement 14 und dem ersten Randflansch 40 der Zwischenwand 6 dann wie im Folgenden beschrieben hergestellt.

Zunächst wird das Dichtungselement 14 unter radial elastischer Aufweitung derart auf der radial äußeren Umfangsfläche des ersten Randflansches 40 der Zwischenwand 6 platziert, dass bei der elastischen Rückfederung der radial äußere Vorsprung 17 in die Ausnehmung 16 eingreift. Dann wird die Zwischenwand 6 im Standfuß 48 und genauer in der ringförmigen Matrix 54 angeordnet und dort eingespannt, beispielsweise durch hier nicht gezeigte Spannmittel. Alternativ könnte die Zwischenwand 6 im Standfuß 48 zuerst eingespannt und dann das Dichtungselement 14 am ersten Randflansch 40 der Zwischenwand 6 montiert werden.

Zwischen der radial äußeren Umfangsfläche des ersten Randflansches 40 der Zwischenwand 6 und des Dichtungselements 14 einerseits und der gerundeten Kontur 58 der Matrix 54 andererseits ist dann ein radialer Ringspalt 64 vorhanden ist, wie insbesondere in Fig.3B zu sehen ist.

Zuvor, gleichzeitig oder danach wird der beispielsweise durch Tiefziehen vorgeformte Gehäuse 4A des Federspeicherbremszylinders 4 innerhalb des ringförmigen Stempels 56 und am Presskopf fixiert, wobei insbesondere dessen zweiter Randflansch 42 als nach radial außen vorspringende, im Querschnitt erweiterte Stufe 60 geformt ist. Das freie Ende 62 des zweiten Randflansches 42 hat hier noch eine glatt zylindrische Form. Die Stufe 60 kontaktiert von unten her eine komplementär geformte Kontur 50 des Stempels 56. Dabei ragt der restliche, vom zweiten Randflansch 42 abweichende Teil des Gehäuses 4A des Federspeicherbremszylinders 4 durch den Stempel 56 hindurch hier beispielsweise nach oben. Dadurch bildet der Stempel 56 mit seiner Kontur 50 ein Widerlager für das Gehäuse 4A des Federspeicherbremszylinders 4 und kann insbesondere axiale Kräfte aufnehmen, die hier beispielsweise von unten her auf den zweiten Randflansch 42 wirken. Der Stempel 56 ist daher bevorzugt derart ausgebildet, dass er im Bereich der Stufe 60 des zweiten Randflansches 42 des Gehäuses 4A mit seiner Kontur 50 komplementär ausgeformt ist, damit auch die Stufe 60 beim Umformen des freien zylindrischen Endes 62 im Stempel 56 abgestützt werden und sich nicht mehr verformen kann.

Der Stempel 56 befindet sich zusammen mit dem Gehäuse 4A des Federspeicherbremszylinders in Fig.3A in seiner oberen Ausgangsposition. Dabei fluchtet das hier noch zylindrische Ende des zweiten Randflansches 42 in axialer Richtung gesehen mit dem Ringspalt 64. Dieser Zustand ist Fig.3A und Fig.3B gezeigt.

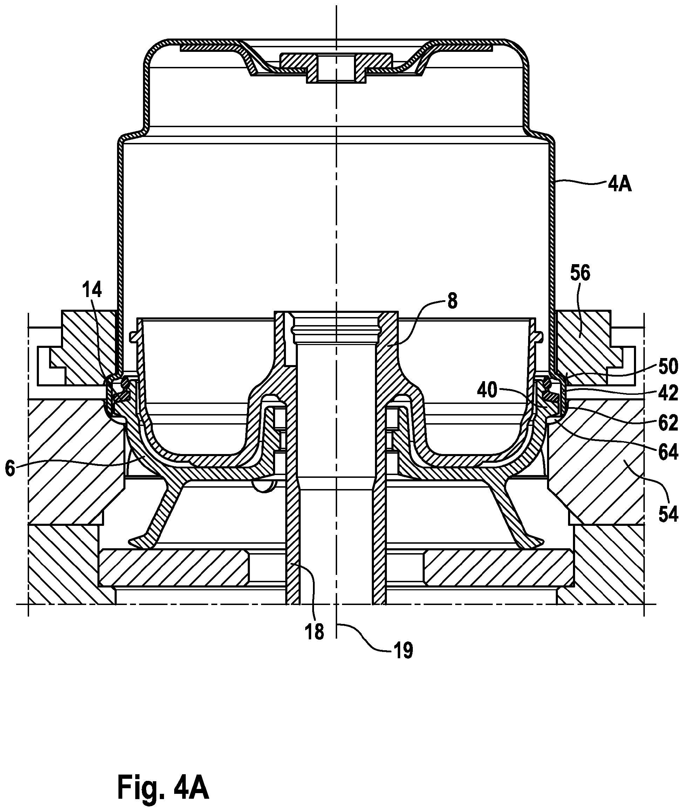

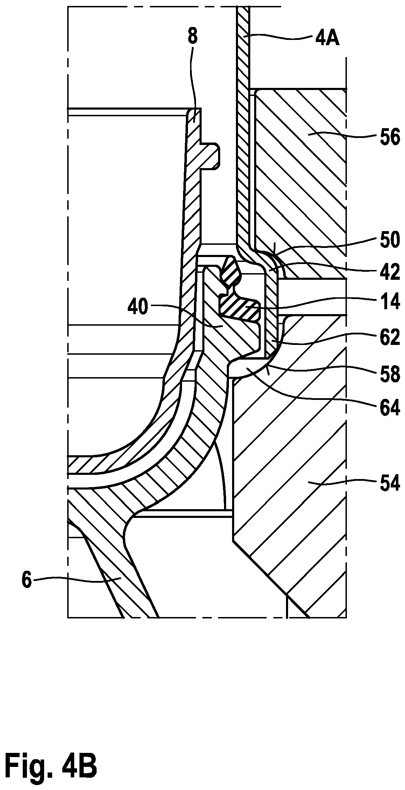

In einem nächsten, in **Fig.4A** und **Fig.4B** gezeigten Schritt wird dann der ringförmige Stempel 56 des Bördelwerkzeugs 46 zusammen mit dem am Preßkopf anliegenden Gehäuse 4A des Federspeicherbremszylinders 4 in einem Hub ausgehend von der oberen Ausgangsposition derart in Richtung Matrix 54 bewegt, dass der zweite Randflansch 42 des Gehäuses 4A und genauer dessen glatt zylindrisches freies Ende 62 in den Ringspalt 64 zwischen der gerundeten Kontur 58 der Matrix 54 einerseits und das Dichtungselement 14 und den ersten Randflansch 40 der Zwischenwand 6 gedrückt wird, bis der zylindrische Endabschnitt 62 des zweiten Randflansches 42 bedingt durch die Bewegung im Ringspalt 64 derart plastisch umgeformt ist, dass er das Dichtungselement 14 und den ersten Randflansch 40 der Zwischenwand 6 insbesondere hakenförmig umfasst. Diese Situation ist dann in Fig.5A und Fig.5B gezeigt, in welcher sich der Stempel 56 in seiner Endposition befindet, in welcher er zwischen seiner Kontur 50 und der Kontur 58 der Matrix 54 den zweiten Randflansch 42 endformt.

Wenn dann die Bördelung 44 fertig gestellt ist, wird der Stempel 56 wieder in seine obere Ausgangsposition zurück bewegt und dann das mit der Zwischenwand 6 verbundene Gehäuse 4A des Federspeicherbremszylinder 4 dem Bördelwerkzeug 46 entnommen. Es versteht sich, dass noch weitere, hier nicht beschrieben Schritte notwendig sind, um den kombinierten Betriebsbrems- und Federspeicherbremszylinder 1 fertig zu stellen. Weiterhin ist das Bördelwerkzeug 46 in den Figuren 3A bis 5A zwar in seiner bevorzugten Gebrauchslage dargestellt und die Ausgangsposition des Stempels 56 ist dann eine obere Ausgangsposition und die Endposition eine untere Endposition. Desgleichen könnte das Bördelwerkzeug 46 aber auch umgekehrt oder in einer beliebigen Lage angeordnet sein.

### BEZUGSZEICHENLISTE

- 1: Betriebsbrems- und Federspeicher
- 2: Betriebsbremszylinder
- 2A: Gehäuse Betriebsbremszylinder
- 4: Federspeicherbremszylinder
- 4A: Gehäuse Federspeicherbremszylinder
- 6: Zwischenwand
- 8: Federspeicherbremskolben
- 10: Federkammer
- 12: Federspeicherbremskammer
- 14: Dichtungselement
- 16: radial innere Ausnehmung
- 17: radial äußerer Vorsprung
- 18: Federspeicherbremskolbenstange
- 19: Mittelachse
- 20: Betriebsbremskammer
- 21: Bohrung
- 22: Dichtungsanordnung
- 24: Membrane
- 26: Membranteller
- 28: Druckstange
- 31: Federkammer
- 32: Befestigungsrand
- 34: Aufnahme
- 35: Halteteil
- 36: vierter Randflansch
- 38: dritter Randflansch
- 40: erster Randflansch
- 41: erste Stufe
- 42: zweiter Randflansch
- 43: zweite Stufe
- 44: Bördelung
- 45: Basisteil
- 46: Bördelwerkzeug
- 48: Standfuss
- 50: Kontur
- 52: Abstandshalter
- 54: Matrix
- 56: Stempel
- 58: Kontur
- 60: Stufe
- 62: zylindrisches Ende
- 64: Ringspalt

## Patentansprüche

1. Kombinierter zylindrischer Betriebsbrems- und Federspeicherbremszylinder (1), mit
a) einer Mittelachse (19),
b) einem in einem Gehäuse (2A) des Betriebsbremszylinders (2) angeordneten, eine be- und entlüftbare Betriebsbremskammer (20) begrenzende bewegliche Membrane (24), welche mit ihrem Befestigungsrand (32) am Gehäuse (2A) des Betriebsbremszylinders (2) gehalten und auf einen mit einer Betriebsbremskolbenstange (28) verbundenen Membranteller (26) wirkt, sowie
c) mit einem in einem Gehäuse (4A) des Federspeicherbremszylinders (4) angeordneten, durch wenigstens eine Speicherfeder (10) betätigbaren be- und entlüftbare Federspeicherbremskammer (12) begrenzenden Federspeicherbremskolben (8) mit einer Federspeicherbremskolbenstange (18), wobei
d) die Federspeicherbremskolbenstange (18) durch eine zentrale Kolbenstangenbohrung (21) einer Zwischenwand (6) zwischen dem Betriebsbremszylinder (2) und dem Federspeicherbremszylinder (4) derart ragt, dass sie auf den Membranteller (26) wirkt, wobei
e) die Zwischenwand (6) einen ersten Randflansch (40) aufweist,
f) das Gehäuse (4A) des Federspeicherbremszylinders (4) aus einem verformbaren Material besteht und einen zweiten Randflansch (42) aufweist,
g) wobei zwischen dem ersten Randflansch (40) und dem zweiten Randflansch (42) wenigstens ein ringförmiges Dichtungselement (14) angeordnet ist, welches die Federspeicherbremskammer (12) gegenüber der Umgebung abdichtet, wobei
h) der zweite Randflansch (42) des Gehäuses (4A) des Federspeicherbremszylinders (4) unter plastischer Verformung einerseits um das Dichtungselement (14) und andererseits um den ersten Randflansch (40) der Zwischenwand (6) von außen her derart plastisch herumgeformt ist, dass einerseits das Gehäuse (4A) des Federspeicherbremszylinders (4) mit der Zwischenwand (6) verbunden und andererseits das Dichtungselement (14) zwischen dem ersten Randflansch (40) der Zwischenwand (6) und dem zweiten Randflansch (42) des Gehäuses (4A) des Federspeicherbremszylinders (4) formschlüssig gehalten ist,
**dadurch gekennzeichnet, dass**
i) der Querschnitt des Dichtungselements (14) wenigstens eine radial innere Ausnehmung (16) aufweist, in welche wenigstens ein radial äußerer Vorsprung (17) des ersten Randflansches (40) formschlüssig eingreift, und dass
j) der Querschnitt des Dichtungselements (14) in Richtung der Mittelachse (19) gesehen sich von der Ausnehmung (16) weg zum Federspeicherbremszylinder (4) hin verjüngt.

2. Kombinierter Betriebsbrems- und Federspeicherbremszylinder nach Anspruch 1, **dadurch gekennzeichnet, dass** der Querschnitt des Dichtungselements (14) einen im Wesentlichen quer zur Mittelachse (19) verlaufendes Basisteil (45) aufweist, welches zwischen einer ersten, im Wesentlichen quer zur Mittelachse (19) verlaufenden Stufe (41) des ersten Randflansches (40) und einer zweiten, im Wesentlichen quer zur Mittelachse (19) verlaufende Stufe (43) des zweiten Randflansches (42) axial geklemmt ist.

3. Kombinierter Betriebsbrems- und Federspeicherbremszylinder nach Anspruch 2, **dadurch gekennzeichnet, dass** von dem Basisteil (45) ein hülsenförmiges Halteteil (35) im Wesentlichen parallel zur Mittelachse (19) wegragt, an welchem die wenigstens eine radiale Ausnehmung (16) ausgebildet ist.

4. Kombinierter Betriebsbrems- und Federspeicherbremszylinder nach Anspruch 3, **dadurch gekennzeichnet, dass** ein zu dem Federspeicherbremszylinder (4) hin und von der Zwischenwand (6) weg ragendes freies Ende des Halteteils (35) im Querschnitt gesehen zapfenförmig ausgebildet ist.

5. Kombinierter Betriebsbrems- und Federspeicherbremszylinder nach einem der vorhergehenden Ansprüche, **dadurch gekennzeichnet, dass** das Dichtungselement (14) ein von einem Befestigungsrand einer Membrane abweichendes Dichtungselement ist oder dass das Dichtungselement (14) Bestandteil einer Membrane ist.

6. Kombinierter Betriebsbrems- und Federspeicherbremszylinder nach einem der vorhergehenden Ansprüche, **dadurch gekennzeichnet, dass** der zweite Randflansch (42) des Gehäuses (4A) des Federspeicherbremszylinders (4) im Querschnitt gesehen einen Haken ausbildet, welcher einerseits das Dichtungselement (14) und andererseits den ersten Randflansch (40) der Zwischenwand (6) umgreift.

7. Kombinierter Betriebsbrems- und Federspeicherbremszylinder nach einem der vorhergehenden Ansprüche, **dadurch gekennzeichnet, dass** die Zwischenwand (6) einen vom ersten Randflansch (40) in axialer Richtung weg weisenden und beabstandeten dritten Randflansch (38) aufweist, welcher mit dem Gehäuse (2A) des Betriebsbremszylinders (2) verbunden ist.

8. Kombinierter Betriebsbrems- und Federspeicherbremszylinder nach Anspruch 7, **dadurch gekennzeichnet, dass** die Verbindung zwischen dem dritten Randflansch (38) der Zwischenwand (6) und dem Gehäuse (2A) des Betriebsbremszylinders (4) durch plastische Umformung eines vierten Randflansches (36) des Gehäuses (2A) des Betriebsbremszylinders (2) um den dritten Randflansch (38) sowie um einen Befestigungsrand (32) einer Membrane (24) herum hergestellt ist.

9. Verfahren zur Herstellung eines kombinierten zylindrischen Betriebsbrems- und Federspeicherbremszylinders (1) nach einem der vorhergehenden Ansprüche, gekennzeichnet wenigstens durch folgende, in der angegebenen Reihenfolge zeitlich aufeinander folgende Verfahrensschritte:
a) Das Dichtungselement (14) wird unter radial elastischer Aufweitung derart am ersten Randflansch (40) der Zwischenwand (6) montiert, dass bei der radial elastischen Rückfederung des Dichtungselements (14) der radial äußere Vorsprung (17) des ersten Randflansches (40) in die radial innere Ausnehmung (16) des Dichtungselements (14) formschlüssig eingreift,
b) wenigstens die Zwischenwand (6), die wenigstens eine Speicherfeder und der Federspeicherbremskolben (8) werden in eine ringförmige Matrix (54) eines Bördelwerkzeugs (46) eingelegt, wobei die Matrix (54) wenigstens den ersten Randflansch (40) der Zwischenwand (6) mit einer im Querschnitt gesehen gerundeten Kontur (58) mit Abstand umfasst,
c) das Gehäuse (4A) des Federspeicherbremszylinders (4) wird innerhalb eines ringförmigen Stempel (56) des Bördelwerkzeugs (46) derart positioniert und angeordnet, dass das Gehäuse (4A) zusammen mit dem Stempel (56) in Richtung der Mittelachse (19) bewegbar ist und ein zylindrisches Ende (62) des zweite Randflansches (42) des Gehäuses (4A) des Federspeicherbremszylinders (2) mit der gerundeten Kontur (58) axial fluchtet, wobei der der zweite Randflansch (42) in einer Ausgangsposition des Stempels (56) von der Kontur (58) der Matrix (54) axial beabstandet ist,
d) der ringförmige Stempel (56) wird zusammen mit dem Gehäuse (4A) des Federspeicherbremszylinders (2) in einem Hub ausgehend von der Ausgangsposition in Richtung Matrix (54) in eine Endposition bewegt, wobei im Laufe dieser Bewegung das zylindrische Ende (62) des zweiten Randflansches (42) des Gehäuses (4A) des Federspeicherbremszylinders (2) gegen die gerundete Kontur (58) der Matrix (54) gedrückt wird, bis das zylindrische Ende (62) derart plastisch umgeformt ist, dass es das wenigstens eine Dichtungselement (14) und den ersten Randflansch (40) der Zwischenwand (6) formschlüssig umgreift.

10. Verfahren nach Anspruch 9, **dadurch gekennzeichnet, dass** der zweite Randflansch (42) zeitlich vor dem Schritt a) derart vorgeformt wird, dass er eine radial äußere Stufe (60) aufweist und dass der ringförmige Stempel (56) eine radial innere Kontur aufweist, welche komplementär zu der radial äußeren Stufe (60) des zweiten Randflansches (42) ausgebildet ist.

11. Verfahren nach Anspruch 9, **dadurch gekennzeichnet, dass** bei Schritt c) das Positionieren des Gehäuses (4A) des Federspeicherbremszylinders (4) innerhalb eines ringförmigen Stempel (56) des Bördelwerkzeugs (46) derart durchgeführt wird, dass die radial äußere Stufe (60) des zweiten Randflansches (42) die radial innere Kontur des Stempels kontaktiert und das restliche Gehäuse (4A) des Federspeicherbremszylinders (4) von der Matrix (54) weg weisend den Stempel (56) durchragt.

12. Verfahren nach einem der Ansprüche 9 bis 11, **dadurch gekennzeichnet, dass**
e) nachfolgend zu Schritt d) der Stempel in die Ausgangsposition zurück bewegt wird,
f) der kombinierte Betriebsbrems- und Federspeicherbremszylinder (1) dem Bördelwerkzeug (46) entnommen wird.

13. Verfahren nach einem der Ansprüche 9 bis 12, **dadurch gekennzeichnet, dass** der Stempel (56) und/oder die Matrix (54) aus einem Bauteil oder aus aneinander lösbar befestigten Bauteilen bestehen.

14. Verfahren nach einem der Ansprüche 9 bis 13, **dadurch gekennzeichnet, dass** Schritt a) auch zeitlich nachfolgend in Bezug zu Schritt b) erfolgen kann.

15. Verfahren nach einem der Ansprüche 9 bis 13, **dadurch gekennzeichnet, dass** Schritt c) auch zeitlich nachfolgend in Bezug zu Schritt b) erfolgen kann.

## Claims

1. Combined cylindrical service brake and spring brake cylinder (1), with
a) a central axis (19),
b) a movable diaphragm (24), which is located in a housing (2A) of the service brake cylinder (2), bounds a service brake chamber (20) capable of being ventilated and vented, is held at the housing (2A) of the service brake cylinder (2) by its mounting edge (32) and acts on a diaphragm plate (26) joined to a service brake piston rod (28), and with
c) a spring brake piston (8) with a spring brake piston rod (18), which spring brake piston (8) is located in a housing (4A) of the spring brake cylinder (4), is actuable by at least one accumulator spring (10) and bounds a spring brake chamber (12) capable of being ventilated and vented, wherein
d) the spring brake piston rod (18) extends through a central piston rod bore (21) of a partition (6) between the service brake cylinder (2) and the spring brake cylinder (4) in such a way that is acts on the diaphragm plate (26), wherein
e) the partition (6) has a first edge flange (40),
f) the housing (4A) of the spring brake cylinder (4) is made of a deformable material and has a second edge flange (42),
g) wherein at least one annular seal element (14) sealing the spring brake chamber (12) against the environment is located between the first edge flange (40) and the second edge flange (42), wherein
h) the second edge flange (42) of the housing (4A) of the spring brake cylinder (4) is formed plastically from the outside around the seal element (14) on the one hand and around the first edge flange (40) of the partition (6) on the other hand in such a way that on the one hand the housing (4A) of the spring brake cylinder (4) is joined to the partition (6) and on the other hand the seal element (14) is positively held between the first edge flange (40) of the partition (6) and the second edge flange (42) of the housing (4A) of the spring brake cylinder (4), **characterised in that**
i) the cross-section of the seal element (14) has at least one radially inner recess (16), with which at least one radially outer projection (17) of the first edge flange (40) engages positively, and **in that**
j) the cross-section of the seal element (14) tapers from the recess (16) towards the spring brake cylinder (4) as viewed in the direction of the central axis (19).

2. Combined service brake and spring brake cylinder according to claim 1, **characterised in that** the cross-section of the seal element (14) has a base part (45), which extends substantially transversely to the central axis (19) and is axially clamped between a first step (41) - extending substantially transversely to the central axis (19) - of the first edge flange (40) and a second step (43) - extending substantially transversely to the central axis (19) - of the second edge flange (42).

3. Combined service brake and spring brake cylinder according to claim 2, **characterised in that** a sleeve-shaped holding part (35), on which at least one radial recess (16) is formed, extends from the base part (45) substantially parallel to the central axis (19).

4. Combined service brake and spring brake cylinder according to claim 3, **characterised in that** a free end of the holding part (35), which projects towards the spring brake cylinder (4) and away from the partition (6), is peg-shaped in design if viewed in cross-section.

5. Combined service brake and spring brake cylinder according to any of the preceding claims, **characterised in that** the seal element (14) is a seal element divergent from a mounting edge of a diaphragm, or **in that** the seal element (14) is a part of a diaphragm.

6. Combined service brake and spring brake cylinder according to any of the preceding claims, **characterised in that** the second edge flange (42) of the housing (4A) of the spring brake cylinder (4) forms a hook if viewed in cross-section, which hook encompasses the seal element (14) on the one hand and the first edge flange (40) of the partition (6) on the other hand.

7. Combined service brake and spring brake cylinder according to any of the preceding claims, **characterised in that** the partition (6) has a third edge flange (38), which point away from and is located at a distance from the first edge flange (40), and which is joined to the housing (2A) of the service brake cylinder (2).

8. Combined service brake and spring brake cylinder according to claim 7, **characterised in that** the connection between the third edge flange (38) of the partition (6) and the housing (2A) of the service brake cylinder (2) is established by the plastic deformation of a fourth edge flange (36) of the housing (2A) of the service brake cylinder (2) around the third edge flange (38) and around a mounting edge (32) of a diaphragm (24).

9. Method for producing a combined cylindrical service brake and spring brake cylinder (1) according to any of the preceding claims, **characterised by** at least the following procedural steps following one another in time in the specified sequence:
a) The seal element (14) is, while being expanded radially, mounted on the first edge flange (40) of the partition (6) in such a way that, during the radially elastic rebound of the seal element (14), the radially outer projection (17) of the first edge flange (40) engages with the radially inner recess (16) of the seal element (14),
b) at least the partition (6), the at least one accumulator spring and the spring brake piston (8) are placed in an annular matrix (54) of a bordering tool (46), the matrix (54) encompassing at least the first edge flange (40) of the partition (6) at a distance with a rounded contour (58) if viewed in cross-section,
c) the housing (4A) of the spring brake cylinder (4) is positioned and arranged within an annular punch (56) of the bordering tool (46) in such a way that the housing (4A) together with the punch (56) is movable in the direction of the central axis (19) and a cylindrical end (62) of the second edge flange (42) of the housing (4A) of the spring brake cylinder (4) is axially aligned to the rounded contour (58), wherein the second edge flange (42) is axially spaced from the contour (58) of the matrix (54) in a starting position of the punch (56),
d) from the starting position, the annular punch (56), together with the housing (4A) of the spring brake cylinder (4), is moved in one stroke in the direction of the matrix (54) into an end position, wherein in the course of this movement the cylindrical end (62) of the second edge flange (42) of the housing (4A) of the spring brake cylinder (4) is pressed against the rounded contour (58) of the matrix (54) until the cylindrical end (62) is plastically reshaped in such a way that it positively encompasses the at least one seal element (14) and the first edge flange (40) of the partition (6).

10. Method according to claim 9, **characterised in that** the second edge flange (42) is preformed before step a) in such a way that it has a radially outer step (60), and **in that** the annular punch (56) has a radially inner contour designed to complement the radially outer step (60) of the second edge flange (42).

11. Method according to claim 9, **characterised in that** in step c) the housing (4A) of the spring brake cylinder (4) is positioned within an annular punch (56) of the bordering tool (46) in such a way that the radially outer step (60) of the second edge flange (42) contacts the radially inner contour of the punch and the rest of the housing (4A) of the spring brake cylinder (4) extends through the punch (56}while pointing away from the matrix (54).

12. Method according to any of claims 9 to 11, **characterised in that**
e) following step d), the punch is returned into the starting position,
f) the combined service brake and spring brake cylinder (1) is removed from the bordering tool (46).

13. Method according to any of claims 9 to 12, **characterised in that** the punch (56) and/or the matrix (54) consist(s) of one component or of components which are releasably secured to each other.

14. Method according to any of claims 9 to 13, **characterised in that** step a) can alternatively follow step b) in time.

15. Method according to any of claims 9 to 13, **characterised in that** step c) can alternatively follow step b) in time.

## Revendications

1. Cylindre (1) cylindrique combiné de frein de service et de frein à ressort accumulateur, comprenant
a) un axe (19) médian,
b) une membrane (24) mobile, qui est disposée dans une enveloppe (2A) du cylindre (2) de frein de service, qui délimite une chambre (20) de frein de service pouvant être alimentée en air et purgée, qui est maintenue par son bord (32) de fixation sur l'enveloppe (2A) du cylindre (2) de frein de service et qui agit sur une coupelle (26) de membrane, reliée à une tige (28) de piston de frein de service, ainsi que
c) comprenant un piston (8) de frein de ressort accumulateur, qui est disposé dans une enveloppe (4A) du cylindre (4) de frein à ressort accumulateur, qui délimite une chambre (12) de frein de ressort accumulateur pouvant être alimentée en air et purgée et pouvant être actionnée par au moins un ressort (10) accumulateur, et qui a une tige (18) de piston de frein à ressort accumulateur, dans lequel
d) la tige (18) de piston de frein à ressort accumulateur pénètre dans un trou (21) central de tige de piston d'une paroi (6) intermédiaire entre le cylindre (2) de frein de service et le cylindre (4) de frein à ressort accumulateur, de manière à agir sur la coupelle (26) de la membrane, dans lequel
e) la paroi (6) intermédiaire a une première bride (40) de bord,
f) l'enveloppe (4A) du cylindre (4) de frein à ressort accumulateur est en un matériau déformable et a une deuxième bride (42) de bord,
g) dans lequel, entre la première bride (40) de bord et la deuxième bride (42) de bord, est disposé au moins un élément (14) annulaire d'étanchéité, qui rend étanche la chambre (12) de frein à ressort accumulateur par rapport à l'atmosphère ambiante, dans lequel
h) la deuxième bride (42) de bord de l'enveloppe (4A) du cylindre (4) de frein à ressort accumulateur est déformée plastiquement de l'extérieur par déformation plastique d'une part autour de l'élément (14) d'étanchéité et d'autre part autour de la première bride (40) de bord de la paroi (6) intermédiaire, de manière à ce que, d'une part l'enveloppe (4A) du cylindre (4) de frein à ressort accumulateur soit reliée à la paroi (6) intermédiaire, et d'autre part que l'élément (14) d'étanchéité soit maintenu à complémentarité de forme entre la première bride (40) de bord de la paroi (6) intermédiaire et la deuxième bride (42) de bord de l'enveloppe (4A) du cylindre (4) de frein à ressort accumulateur,
**caractérisé en ce que**
i) la section transversale de l'élément (14) d'étanchéité a au moins un évidement (16) intérieur radialement, dans lequel pénètre à complémentarité de forme au moins une saillie (17) extérieure radialement de la première bride (40) de bord et **en ce que**
j) la section transversale de l'élément (14) d'étanchéité se rétrécit en s'éloignant de l'évidement (16) et en allant vers le cylindre (4) de frein à ressort accumulateur.

2. Cylindre combiné de frein de service et de frein à ressort accumulateur suivant la revendication 1, **caractérisé en ce que** la section transversale de l'élément (14) d'étanchéité a une partie (45) de base, qui s'étend sensiblement transversalement à l'axe (19) médian et qui est serrée axialement entre un premier gradin (41), s'étendant sensiblement transversalement à l'axe (19) médian, de la première bride (40) de bord et un deuxième gradin (43) s'étendant sensiblement transversalement à l'axe (19) médian, de la deuxième bride (42) de bord.

3. Cylindre combiné de frein de service et de frein à ressort accumulateur suivant la revendication 2, **caractérisé en ce qu'**il est issu de la partie (45) de base, sensiblement parallèlement à l'axe (18) médian, une partie (35) de maintien en forme de douille, sur laquelle est constitué le au moins un évidement (16) radial.

4. Cylindre combiné de frein de service et de frein à ressort accumulateur suivant la revendication 3, **caractérisé en ce qu'**une extrémité libre en saillie, allant vers le cylindre (4) de frein à ressort accumulateur et s'éloignant de la paroi (6) intermédiaire, de la partie (35) de maintien est constituée sous la forme d'un tourillon, considéré en section transversale.

5. Cylindre combiné de frein de service et de frein à ressort accumulateur suivant l'une des revendications précédente, **caractérisé en ce que** l'élément (14) d'étanchéité est un élément d'étanchéité se distinguant d'un bord de fixation d'une membrane ou **en ce que** l'élément (14) d'étanchéité est une partie constitutive d'une membrane.

6. Cylindre combiné de frein de service et de frein à ressort accumulateur suivant l'une des revendications précédentes, **caractérisé en ce que** la deuxième bride (42) de bord de l'enveloppe (4A) du cylindre (4) de frein à ressort accumulateur constitue, considéré en section transversale, un crochet, qui s'accroche, d'une part, à l'élément (14) d'étanchéité, et d'autre part, à la première bride (40) de bord de la paroi (6) intermédiaire.

7. Cylindre combiné de frein de service et de frein à ressort accumulateur suivant l'une des revendications précédentes, **caractérisé en ce que** la paroi (6) intermédiaire a une troisième bride (38) de bord s'éloignant dans la direction axiale de la première bride (40) de bord et en étant à distance et qui est reliée à l'enveloppe (2A) du cylindre (2) de frein de service.

8. Cylindre combiné de frein de service et de frein à ressort accumulateur suivant la revendication 7, **caractérisé en ce que** la liaison entre la troisième bride (38) de bord de la paroi (6) intermédiaire et l'enveloppe (2A) du cylindre (2) de frein de service est obtenue par déformation plastique d'une quatrième bride (36) de bord de l'enveloppe (2A) du cylindre (2) de frein de service autour de la troisième bride (38) de bord, ainsi qu'autour d'un bord (32) de fixation d'une membrane (24).

9. Procédé de fabrication d'un cylindre (1) cylindrique combiné de frein de service et de frein à ressort accumulateur suivant l'une des revendications précédentes, **caractérisé par** au moins les stades de procédé suivants, se déroulant les uns après les autres dans le temps dans l'ordre indiqué :
a) on monte l'élément (4) d'étanchéité avec agrandissement élastique radialement sur la première bride (40) de bord de la paroi (6) intermédiaire, de manière à ce que, lors du retour élastique de l'élément (14) d'étanchéité, la saillie (17) extérieure radialement de la première bride (40) de bord pénètre à complémentarité de forme dans l'évidement (16) intérieur radialement de l'élément (14) d'étanchéité,
b) on insère au moins la paroi (6) intermédiaire, le au moins un ressort accumulateur et le piston (8) de frein à ressort accumulateur dans une matrice (54) annulaire d'un outil (46) de bordage, la matrice (54) comprenant, à distance, au moins la première bride (40) de bord de la paroi (6) intermédiaire ayant un contour (58) arrondi, considéré suivant la section transversale,
c) on met en position et on dispose l'enveloppe (4A) du cylindre (4) de frein à ressort accumulateur à l'intérieur d'un poinçon (56) annulaire de l'outil (46) de bordage, de manière à ce que l'enveloppe (4A) puisse, ensemble avec le poinçon (56), être déplacée dans la direction de l'axe (19) médian et qu'une extrémité (62) cylindrique de la deuxième bride (42) de bord de l'enveloppe (4A) du cylindre (2) de frein à ressort accumulateur soit alignée axialement avec le contour (58) arrondi, la deuxième bride (42) de bord étant à distance axialement dans une position initiale du poinçon (56) du contour (58) de la matrice (54),
d) on fait aller dans une position d'extrémité le poinçon (56) annulaire, ensemble avec l'enveloppe (4A) du cylindre (2) de frein à ressort accumulateur, suivant une course à partir de la position initiale, en direction de la matrice (54), dans lequel, au cours de ce déplacement, l'extrémité (62) cylindrique de la deuxième bride (42) de bord de l'enveloppe (4A) du cylindre (2) de frein à ressort accumulateur est repoussée sur le contour (58) arrondi de la matrice (54) jusqu'à ce que l'extrémité (62) soit déformée plastiquement, de manière à prendre à complémentarité de forme le au moins un élément (14) d'étanchéité et la première bride (40) de bord de la paroi (6) intermédiaire.

10. Procédé suivant la revendication 9, **caractérisé en ce que** l'on déforme à l'avance dans le temps, avant le stade a), la deuxième bride (42) de bord, de manière à ce qu'elle ait un gradin (60) extérieur radialement et **en ce que** le poinçon (56) annulaire a un contour intérieur radialement, qui est constitué complémentairement du gradin (60) extérieur radialement de la deuxième bride (42) de bord.

11. Procédé suivant la revendication 9, **caractérisé en ce qu'**au stade c) on effectue la mise en position de l'enveloppe (4A) du cylindre (4) de frein à ressort accumulateur à l'intérieur d'un poinçon (56) annulaire de l'outil (40) de bordage, de manière à ce que le gradin (60) extérieur radialement de la deuxième bride (42) de bord entre en contact avec le contour intérieur radialement du poinçon et de manière à ce que le reste de l'enveloppe (4A) du cylindre (4) de frein à ressort accumulateur, tourné loin de la matrice (54), traverse le poinçon (56).

12. Procédé suivant l'une des revendications 9 à 11, **caractérisé en ce que**
e) à la suite du stade d), on ramène le poinçon dans la position initiale,
f) on retire, de l'outil (46) de bordage, le cylindre (1) combiné de frein de service et de frein à ressort accumulateur.

13. Procédé suivant l'une des revendications 9 à 12, **caractérisé en ce que** le poinçon (56) et/ou la matrice (54) sont constitués en une pièce ou en des pièces pouvant être fixées les unes aux autres de manière amovible.

14. Procédé suivant l'une des revendications 9 à 13, **caractérisé en ce que** le stade a) peut s'effectuer aussi à la suite dans le temps du stade b).

15. Procédé suivant l'une des revendications 9 à 13, **caractérisé en ce que** le stade c) peut s'effectuer aussi dans le temps à la suite du stade b).
